# EUROPÄISCHE PATENTSCHRIFT

(11) **EP 1 899 628 B1**
(45) Veröffentlichungstag und Bekanntmachung des Hinweises auf die Patenterteilung: **02.03.2011**
(21) Anmeldenummer: 06763318.0
(22) Anmeldetag: 29.05.2006
(51) Int. Cl.: F16H 55/18

(54) **GETRIEBE-ANTRIEBSEINHEIT**
GEARBOX DRIVE UNIT
UNITE D'ENTRAINEMENT PAR ENGRENAGES

(30) Priorität: 30.06.2005 DE 102005030960
(43) Veröffentlichungstag der Anmeldung: 19.03.2008
(73) Patentinhaber: ROBERT BOSCH GMBH, 70442 Stuttgart (DE)
(72) Erfinder: OBERLE, Hans-Juergen, 76437 Rastatt (DE); SCHWENDEMANN, Franz, 77833 Ottersweier (DE)
(86) Internationale Anmeldenummer: PCT/EP2006/062659
(87) Internationale Veröffentlichungsnummer: WO 2007/003472

(56) Entgegenhaltungen:
- AU-A- 4 513 968
- US-A- 2 868 033
- US-A- 3 138 035
- US-A- 5 702 155
- US-A1- 2004 069 086
- PATENT ABSTRACTS OF JAPAN Bd. 016, Nr. 302 (M-1275), 3. Juli 1992 (1992-07-03) -& JP 04 083956 A (CANON INC), 17. März 1992 (1992-03-17)

## Beschreibung

Die Erfindung betrifft eine Getriebe-Antriebseinheit, insbesondere zur Verstellung von Sitzelementen. Speziell betrifft die Erfindung eine Getriebe-Antriebseinheit mit einem zweistufigen Getriebe zur Verstellung einer Lehne eines Sitzes.

Bekannte Getriebe-Antriebseinheiten für eine Sitzlehnenverstellung sind in der Regel mit einem zweistufigen Getriebe ausgeführt, um die für die Lehnenverstellung erforderlichen hohen Momente bei einer kompakten Bauweise aufzubringen. Bedingt durch den eingeschränkten Bauraum im Sitz ist es bei den bekannten Getriebe-Antriebseinheiten erforderlich, eine Ausführung für die Fahrerseite und eine spiegelbildliche Ausführung für die Beifahrerseite herzustellen. Dadurch muss eine gewisse Anzahl an Bauteilen in zwei Ausgestaltungsvarianten, das heißt in Links- und in Rechtsausführung, bereitgestellt werden. Außerdem hat die asymmetrische Ausführung der bekannten Getriebe-Antriebseinheiten den Nachteil, dass eine unsymmetrische Kräfteverteilung im Getriebe auftritt, so dass ein Lagerbolzen oder dergleichen mit einem Biegemoment beaufschlagt ist. Im Hinblick auf die Vorgabe, möglichst hohe Verstellkräfte bereitzustellen, ist auch dies von Nachteil.

Eine gattungsgemäße Getriebe-Antriebseinheit ist aus der US-A-2 868 033 bekannt.

### Vorteile der Erfindung

Die erfindungsgemäße Getriebe-Antriebseinheit mit den Merkmalen des Anspruchs 1 hat demgegenüber den Vorteil, dass eine zumindest näherungsweise symmetrische Kraftverteilung im Getriebe erreicht werden kann. Außerdem ist eine Verringerung der in zwei verschiedenen Ausführungen benötigten Teile für die Links- und Rechtsausführung der Getriebe-Antriebseinheit möglich.

Durch die in den Unteransprüchen aufgeführten Maßnahmen sind vorteilhafte Weiterbildungen der im Anspruch 1 angegebenen Getriebe-Antriebseinheit möglich.

Durch eine erfindungsgemäße Ausgestaltung der Getriebe-Antriebseinheit kann auch auch die Funktionssicherheit bei einem System aus einem Sitzelement und einem das Sitzelement betätigenden Elektromotor verbessert werden.

In vorteilhafter Weise ist zwischen dem ersten Rad und dem zweiten Rad ein Lagerabschnitt vorgesehen, der in einem Lagerelement drehbar gelagert ist. Das Lagerelement kann dabei U-förmig ausgestaltet sein, um ein Befüllen des Getriebes von oben zu ermöglichen. Eine Ausgestaltung mit zwei U-förmigen Lagerelementen zur Aufnahme der Zwischeneinheit ist dabei von besonderem Vorteil.

In vorteilhafter Weise sind das erste Rad und das zweite Rad jeweils als Zahnrad ausgebildet, wobei das erste Rad zumindest im Bereich der Zähne elastischer ausgestaltet ist als das zweite Rad, um bei einer symmetrischen Krafteinleitung eine Verschiebung einer Zahnflanke eines belasteten Zahns des ersten Rades relativ zu einer Zahnflanke eines belasteten Zahns des zweiten Rades zu ermöglichen. Dadurch ist eine Dämpfung des Momentenanstiegs bei zunehmender Belastung der Getriebe-Antriebseinheit möglich. Im unbelasteten Zustand und bei geringer Belastung läuft die Zahnflanke des Zahnes des ersten Rades dabei der Zahnflanke des Zahnes des zweiten Rades voraus. Dies kann insbesondere dadurch erreicht werden, dass die Zähne des ersten Rades eine größere Zahndicke aufweisen als die Zähne des zweiten Rades.

In vorteilhafter Weise ist ein Torsionsabschnitt vorgesehen, der das erste Rad mit dem zweiten Rad verbindet und eine Verdrehung des ersten Rades relativ zu dem zweiten Rad der Abtriebseinheit ermöglicht. Dadurch kann eine Dämpfung des Momentenanstiegs, insbesondere bei hohen Momenten erfolgen, die beispielsweise im Blocklauf auftreten. Speziell kann ein Sitzelement oder dergleichen in der Endposition gegen einen Anschlag fahren, wobei es aus Sicherheitsgründen von Vorteil ist, wenn der Anschlag relativ hart ausgeführt ist, was bei einem steifen Sitzsystem der Fall ist. Dabei kann es jedoch zu einem steilen Momentenanstieg kommen, der eine Beschädigung von Bauteilen der Getriebe-Antriebseinheit zur Folge haben kann. Durch den Torsionsabschnitt ist dieser Momentenanstieg bis zum Block bedämpft, so dass die Getriebe-Antriebseinheit gegen Beschädigung geschützt ist. Insbesondere ein Ausbrechen von Zähnen eines der beteiligten Zahnräder wird dadurch wirkungsvoll verhindert. Dadurch wird eine hohe Funktionssicherheit erreicht.

Vorzugsweise ist die Abtriebsschnittstelle dabei so ausgestaltet, dass ein Formschluss mit dem Anschlusselement lediglich im Bereich des ersten Rades und gegebenenfalls abschnittsweise im Bereich des Torsionsabschnittes erfolgt. Dies kann beispielsweise dadurch erfolgen, dass das Anschlusselement nur teilweise in die Abtriebsschnittstelle einführbar ist, was durch eine Begrenzung erreicht werden kann, oder dass über einen gewissen Bereich ein ausreichendes Spiel zum Anschlusselement besteht, das eine Torsion des Torsionsabschnittes ermöglicht.

Die Abtriebseinheit kann aus einem das erste Rad umfassenden Trägerrad und einem das zweite Rad umfassenden Stützrad ausgestaltet sein, wobei das Stützrad mit dem Trägerrad durch eine Mitnehmerverzahnung oder dergleichen formschlüssig verbunden ist. Das Trägerrad kann dabei aus einem kostengünstigen Werkstoff, beispielsweise aus einem Kunststoff, hergestellt sein, während das Stützrad aus einem hochwertigeren, stabileren Werkstoff, beispielsweise aus Stahl, hergestellt ist. Dadurch wird eine kostengünstige Herstellung der Getriebe-Antriebseinheit ermöglicht, die auch unter erschwerten Bedingungen, wie beispielsweise im Blocklauf, durch die elastische Ausgestaltung des Trägerrades und die hohe Belastbarkeit des Stützrades einen zuverlässigen Betrieb gewährleistet.

Die Getriebe-Antriebseinheit und insbesondere die Abtriebseinheit können so ausgestaltet sein, dass eine beiderseitige Verwendung möglich ist, wodurch spezielle Links- oder Rechtsausführungen nicht erforderlich sind. Allerdings kann die Getriebe-Antriebseinheit auch asymmetrisch ausgestaltet sein, wobei keine oder nur eine geringe Anzahl an Bauteilen in zwei zueinander spiegelbildlichen Ausführungen für die Montage bereitzustellen ist. Speziell bei einer asymmetrisch ausgestalteten Abtriebseinheit ist ein Einbau dieser in zwei verschiedenen Lagen oder Richtungen möglich. Dadurch kann die gleiche Abtriebseinheit sowohl in einer Links- als auch in einer Rechtsausführung der Getriebe-Antriebseinheit eingebaut sein. Die Stückkosten der Getriebe-Abtriebseinheit können dadurch verringert werden.

### Zeichnung

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 ein erstes Ausführungsbeispiel einer erfindungsgemäßen Getriebe-Antriebseinheit in einer schematischen Schnittdarstellung entlang der in Fig. 2 mit I bezeichneten Schnittlinie;
Fig. 2 die in Fig. 1 dargestellte Getriebe-Antriebseinheit des ersten Ausführungsbeispiels in einer schematischen Schnittdarstellung entlang der in Fig. 1 mit II bezeichneten Schnittlinie;
Fig. 3 eine Abtriebseinheit einer erfindungsgemäßen Getriebe-Antriebseinheit gemäß einem zweiten Ausführungsbeispiel in einer axialen Schnittdarstellung;
Fig. 4A und Fig. 4B eine vereinfachte, auszugsweise Darstellung eines Zahns eines ersten Rades und eines Zahns eines zweiten Rades einer Abtriebseinheit aus der in Fig. 3 mit IV bezeichneten Blickrichtung gemäß einem dritten Ausführungsbeispiel der Erfindung bei unterschiedlichen Belastungszuständen und
Fig. 5 ein Diagramm zur Veranschaulichung des Momentenverlaufs für eine Getriebe-Antriebseinheit entsprechend dem ersten, zweiten oder dritten Ausführungsbeispiel der Erfindung.

### Beschreibung der Ausführungsbeispiele

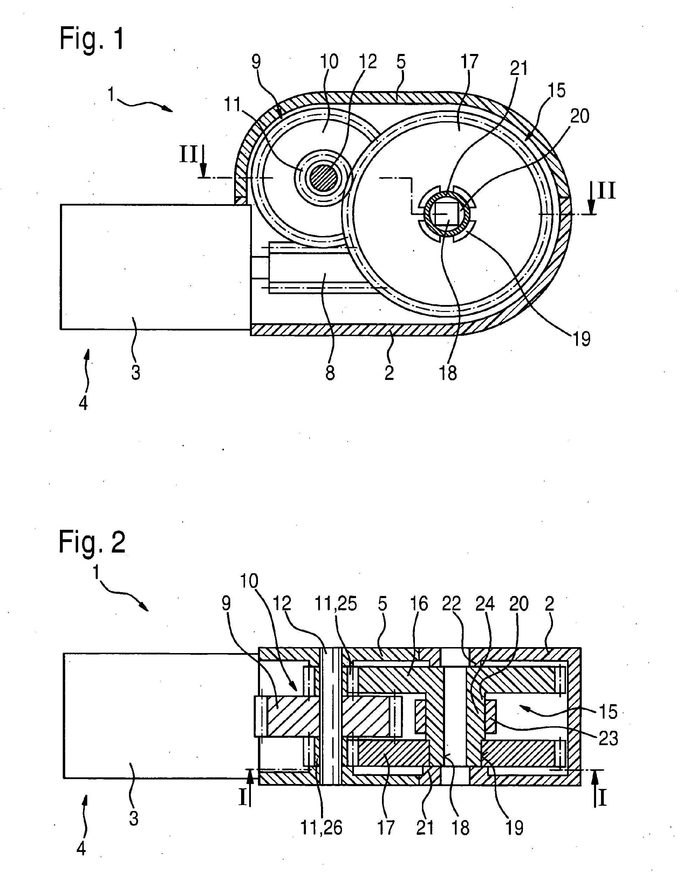

Fig. 1 zeigt ein Ausführungsbeispiel einer Getriebe-Antriebseinheit 1 in einer schematischen Schnittdarstellung entlang der in Fig. 2 mit I bezeichneten Schnittlinie. Die Getriebe-Antriebseinheit 1 kann zur Verstellung von Sitzelementen, insbesondere zur Lehnenverstellung, dienen. Speziell eignet sich die Getriebe-Antriebseinheit 1 für Personenkraftwagen und Lastkraftwagen. Die erfindungsgemäße Getriebe-Antriebseinheit 1 eignet sich jedoch auch für andere Anwendungsfälle.

Die Getriebe-Antriebseinheit 1 weist ein Gehäuseteil 2 auf, das mit einem Antriebsgehäuseteil 3 eines elektrischen Antriebsteils 4 verbunden ist. Das Gehäuseteil 2 ist zum Verschließen der Getriebe-Antriebseinheit 1 mit einem Deckel 5 verbunden, wobei die Verbindung durch Schrauben, Schweißen, Clipsen oder auf andere Weise ausgebildet sein kann. Der Deckel 5 und das Gehäuseteil 2 sind vorzugsweise als zumindest im Wesentlichen aus Kunststoff bestehende Spritzgussteile hergestellt, wobei zur Verstärkung im Bereich der Verbindungen oder an Lagerstellen zur Verbesserung der Lagereigenschaften Elemente aus höherwertigen Werkstoffen hinsichtlich Festigkeit, Lagereigenschaften und dergleichen vorgesehen sein können. Das Gehäuseteil 2, das Antriebsgehäuseteil 3 und der Deckel 5 bilden ein zumindest im Wesentlichen symmetrisches Gehäuse 2, 3, 5 der Getriebe-Antriebseinheit 1, so dass das Gehäuseteil 2, das Antriebsgehäuseteil 3 und der Deckel 5 zur Ausbildung einer Getriebe-Antriebseinheit 1 sowohl in einer Linksausführung als auch in einer Rechtsausführung geeignet sind. Dadurch kann die Anzahl der benötigten Spritzwerkzeuge reduziert werden, wodurch sich die Stückkosten der Getriebe-Antriebseinheit 1 verringern.

Das Antriebsteil 4 treibt über eine Schnecke 8 ein Schneckenrad 9 einer Zwischeneinheit 10 an. Die Zwischeneinheit 10 weist außerdem ein mit dem Schneckenrad 9 zumindest formschlüssig verbundenes Ritzel 11 auf. Das Schneckenrad 9 und das Ritzel 11 sind zumindest mittelbar mit einer Welle 12 der Zwischeneinheit 10 verbunden, die zur Lagerung der Zwischeneinheit 10 in dem Gehäuse 2, 3, 5 der Getriebe-Antriebseinheit 1 dient. Die Welle kann aber auch mehrteilig ausgeführt sein, insbesondere kann sie als beiderseitiger Zapfen an dem Schneckenrad 9 oder dem Ritzel 11 der Zwischeneinheit 10 angeformt sein und im Getriebegehäuse 2, 3, 5, insbesondere im Gehäuseteil 2 oder im Deckel 5, gelagert sein. Somit steht die Zwischeneinheit 10 mit der Schnecke 8 in Wirkverbindung. Das Antriebsteil 4 weist einen Elektromotor auf.

Die Zwischeneinheit 10 steht mit einer Abtriebseinheit 15 in Wirkverbindung, wobei in der Fig. 1 ein zweites Rad 17 der Abtriebseinheit 15 dargestellt ist. Die Abtriebseinheit 15 weist eine Abtriebsschnittstelle 18 auf, die zum Aufnehmen eines Anschlusselementes dient. Die Abtriebsschnittstelle 18 kann dabei an das jeweilige Anschlusselement angepasst werden, wobei die Abtriebsschnittstelle 18 auch mittels eines Übergangsstückes oder dergleichen eine Anpassung an verschiedene Anschlusselemente ermöglicht, ohne dass eine konstruktive Änderung der Abtriebsschnittstelle 18 der Abtriebseinheit 15 erforderlich ist. Das zweite Rad 17 ist über eine formschlüssige Verbindung, beispielsweise eine Mitnehmerverzahnung 19, zumindest mittelbar mit einem ersten Rad 16 (Fig. 2) verbunden. Durch die Mitnehmerverzahnung 19 ist eine formschlüssige Verbindung gegeben, wobei auch eine kraftschlüssige Verbindung ausgebildet sein kann.

Die Abtriebseinheit weist einen Verbindungsabschnitt 20 auf, der zum Verbinden des ersten Rades 16 mit dem zweiten Rad 17 dient. In diesem Ausführungsbeispiel ist die durch die Mitnehmerverzahnung 19 ausgebildete formschlüssige Verbindung zwischen dem Verbindungsabschnitt 20 und dem zweiten Rad 17 vorgesehen. Ferner ist in der Fig. 1 ein Zentriervorsprung 21 geschnitten dargestellt, der zum Zentrieren der Abtriebseinheit 15 in dem Gehäuse 2, 3, 5 dient. Der Zentriervorsprung 21 kann dabei an dem Gehäuseteil 2 und/oder an dem Deckel 5 ausgebildet sein.

Fig. 2 zeigt die Getriebe-Antriebseinheit 1 des ersten Ausführungsbeispiels in einer geschnittenen Darstellung entlang der in Fig. 1 mit II bezeichneten Schnittlinie. Die Lage der Abtriebseinheit 15 ist durch den Zentriervorsprung 21 und einen weiteren Zentriervorsprung 22 sowie ein Lagerelement 23 vorgegeben. Dabei ist der Zentriervorsprung 21 im Bereich des zweiten Rades 17 vorgesehen, und der Zentriervorsprung 22 ist im Bereich des ersten Rades 16 vorgesehen. Das Lagerelement 23 ist als Teil des Gehäuses 2 ausgebildet oder mit dem Gehäuse 2 verbunden. Das Lagerelement 23 bildet zusammen mit einem Lagerabschnitt 24 der Abtriebseinheit 15 ein Lager, um eine Drehbewegung der Abtriebseinheit 15 zu ermöglichen. Die Lagerung kann auch im Deckel 5 ausgebildet sein. Ferner kann im Deckel 5 auch eine Lagerschale ausgebildet sein, so dass sich die endgültige Lagerung erst nach dem Zusammensetzen des Getriebegehäuses 2, 3, 5 ergibt. In diesem Ausführungsbeispiel ist der Lagerabschnitt 24 ein Teil des Verbindungsabschnittes 20. Es können jedoch auch ein oder mehrere Lagerabschnitte vorgesehen sein, um eine Lagerung der Abtriebseinheit 15 in den Seitenwänden des Gehäuseteils 2 zu ermöglichen.

Das Ritzel 11 der Schneckenradstufe ist idealer Weise einteilig ausgeführt und ragt beidseitig über das Schneckenrad 9, wobei ein erster Ritzelabschnitt 25 des Ritzels 11 mit dem ersten Rad 16 und ein zweiter Ritzelabschnitt 26 des Ritzels 11 mit dem zweiten Rad 17 der Abtriebseinheit 15 in Eingriff steht. Das Ritzel 11 kann allerdings auch zweiteilig ausgeführt sein und auf einem Bolzen oder dergleichen gelagert sein. Alternativ kann ein zweiteiliges Ritzel 11 auch auf Zapfen gelagert sein, die beidseitig an das Schneckenrad 9 angeformt sind.

Die Zwischeneinheit 10 ist somit symmetrisch aufgebaut und ermöglicht eine symmetrische Kraftübertragung auf die Abtriebseinheit 15. Die Abtriebseinheit 15 ist als Vorbaugruppe ausgeführt, wobei das erste Rad 16 zusammen mit dem Verbindungsabschnitt 20 ein Trägerrad 16, 20 bildet, auf welches das das zweite Rad 17 bildende Stützrad aufgepresst sein kann. Die Abtriebseinheit 15 kann in zwei verschiedenen Lagen in das Gehäuse 2 eingesetzt werden. Eine Einbaulage ist in den Fig. 1 und 2 dargestellt. In der anderen Einbaulage ist anstelle des ersten Rads 16 das zweite Rad 17 angeordnet, wobei ein Einbau in umgekehrter Drehrichtung erfolgt. Beispielsweise kann das Trägerrad 16, 20 aus einem kostengünstigen Werkstoff, insbesondere aus Kunststoff, hergestellt sein und das Stützrad 17 kann aus einem stabilen Werkstoff, insbesondere aus Metall, hergestellt sein. Dadurch können die Herstellungskosten der Getriebe-Antriebseinheit 1 verringert werden. Das Trägerrad 16, 20 und das Stützrad 17 können jedoch auch aus dem gleichen Material hergestellt sein.

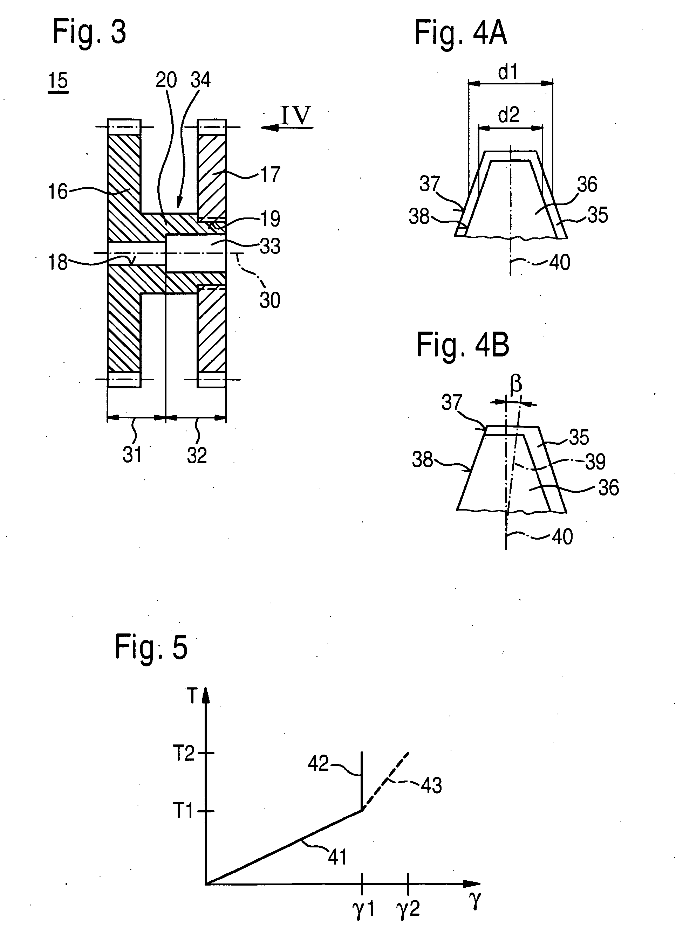

Am ersten Rad 16 und am zweiten Rad 17 kann eine deckungsgleiche Stirnverzahnung vorgesehen sein. Es sind jedoch auch unterschiedliche Verzahnungen am ersten Rad 16 und am zweiten Rad 17 möglich. Ein Beispiel für eine unterschiedliche Verzahnung ist anhand der Fig. 4A und 4B im Detail näher beschrieben.

Fig. 3 zeigt eine Abtriebseinheit 15 einer Getriebe-Antriebseinheit 1 gemäß einem zweiten Ausführungsbeispiel in einer schematischen Schnittdarstellung. In diesem Ausführungsbeispiel ist die Abtriebseinheit 15 hinsichtlich der Abtriebsschnittstelle 18 asymmetrisch ausgestaltet. Dabei ist die Abtriebsschnittstelle 18 im Bereich des ersten Rades 16 und teilweise im Bereich des Verbindungsabschnittes 20 ausgebildet. Die Abtriebsschnittstelle 18 erstreckt sich in Richtung einer Drehachse 30 der Abtriebseinheit 15 über eine Länge 31, über die ein Formschluss zwischen einem Anschlusselement und der Abtriebsschnittstelle 18 möglich ist. Über eine verbleibende Länge 32 weist die Abtriebseinheit 15 einen vergrößerten Querschnitt auf, so dass bei einem eingeführten Anschlusselement ein Spiel zum Anschlusselement besteht. Beispielsweise kann hierfür eine Sackbohrung 33 vorgesehen sein. Zumindest ein Teil des Verbindungsabschnittes 20 ist als Torsionsabschnitt 34 ausgestaltet, der eine Drehung des zweiten Rades 17 relativ zu dem ersten Rad 16 innerhalb gewisser Grenzen ermöglicht. Wenn ein Anschlusselement vollständig über die Länge 31 in die Abtriebsschnittstelle 18 eingeführt ist, dann ist eine Torsion über die Länge 31 verhindert. Eine Torsion des Verbindungsabschnittes 20 kann dann nur noch über den verbleibenden Teil erfolgen. Über die Wahl der Länge 31 kann daher der wirksame Teil des Torsionsabschnittes vorgegeben werden. Eine Anpassung ist beispielsweise über die Tiefe 32 der Sackbohrung 33 möglich. Außerdem kann das Einführen eines Anschlussstückes auf eine Tiefe begrenzt werden, die kleiner als die Länge 31 ist, um den Torsionsabschnitt 34 zu vergrößern. Die Sackbohrung 33 kann dann auch entfallen, wodurch eine symmetrische Ausgestaltung der Abtriebseinheit 15 möglich ist. Das Einführen eines Anschlusselementes kann allerdings auch dadurch begrenzt werden, dass die Abtriebsschnittstelle 18 über die Länge 32 zumindest teilweise mit verringertem Querschnitt ausgebildet ist.

Fig. 4A und 4B zeigen einen Zahn 35 des ersten Rades 16 und einen Zahn 36 des zweiten Rades 17 aus der in Fig. 3 mit IV bezeichneten Blickrichtung in einer vereinfachten, auszugsweisen Darstellung. Fig. 4A zeigt dabei einen Zustand, in dem keine oder nur eine geringe Belastung der Räder 16, 17 der Abtriebseinheit 15 erfolgt. Die Räder 16, 17 weisen eine unterschiedliche Verzahnungsgeometrie auf, wobei in den Fig. 4A und 4B der Fall dargestellt ist, dass die Zähne des ersten Rades 16 des Trägerrades 16, 20 größer als die Zähne des zweiten Rades (Stützrades) 17 ausgeführt sind. Insbesondere ist der Zahn 35 größer als der Zahn 36 ausgebildet. Die Zähne 35 sind so dimensioniert, dass sie dem Antriebsmoment mit genügender Sicherheit Stand halten. Speziell ist eine Zahndicke d1 des Zahns 35 größer als eine Zahndicke d2 des Zahns 36. Dadurch läuft eine Flanke 37 des Zahnes 35 einer Flanke 38 des Zahnes 36 voraus.

Unter erschwerten Bedingungen, wie beispielsweise im Blocklauf, kann sich der Zahn 35 des ersten Rades 16 innerhalb seiner Federeigenschaften verformen, so dass die belastete Flanke 37 quasi deckungsgleich mit der Flanke 38 des Zahnes 36 wird. Das Übertragen oder Abstützen des Moments erfolgt nun über das Stützrad 17. Diese Ausgestaltung hat den Vorteil, dass ein bedämpfter Blocklauf ermöglicht ist, wodurch das Getriebe vor Beschädigung geschützt wird, das heißt, durch die Federeigenschaften des sich im Eingriff befindenden Zahns 35, 36 erfolgt bei großen Momenten eine (gegebenenfalls geringfügige) gegenseitige, gefederte Verdrehung des Trägerrades 16, 20 zum Stützrad 17, wie es in Fig. 4B schematisch dargestellt ist. Bei dieser Verdrehung verdreht sich eine Achse 39 gegenüber einer Achse 40 des Zahnes 35, die die in Fig. 4A gezeigte Ausgangslage des Zahnes 35 angibt, um einen Winkel β. Sofern die Zähne 35, 36 im unbelasteten Zustand parallel zueinander laufen, gibt der Winkel β eine Verdrehung des Zahnes 35 gegenüber dem Zahn 36 an.

Fig. 5 zeigt ein Diagramm zur Illustration der Bedämpfung des Moments, wobei an der Abszisse eine Gesamtverdrehung γ und an der Ordinate das auf die Abtriebseinheit 15 einwirkende Moment T dargestellt ist. Die Gesamtverdrehung γ ergibt sich aus der Verdrehung des Torsionsabschnitts 34, wie sie anhand der Fig. 3 im Detail erläutert ist, und einer Verschiebung der Zähne 35, 36 relativ zueinander, wie sie anhand der Fig. 4A und 4B beschrieben ist.

Bei einer Ausgestaltung, bei der der Verbindungsabschnitt 20 des Trägerrades 16, 20 keine Torsion erlaubt, und lediglich eine relative Verschiebung der Flanke 37 eines Zahns 35 gegenüber einer Flanke 38 des Zahns 36 möglich ist, ergibt sich der in Fig. 5 durch die durchgezogene Linie dargestellte Verlauf, bei dem sich an einen ansteigenden Abschnitt 41 ein zur Ordinate näherungsweise parallel verlaufender Abschnitt 42 anschließt. Im Abschnitt 41 wächst mit zunehmenden Moment T die Verdrehung γ, die sich hierbei zumindest im Wesentlichen allein aus der elastischen Verformung eines Zahnes 35 ergibt. Bei Erreichen des Moments T1 sind die Flanken 37, 38 der Zähne 35, 36 quasi deckungsgleich. Auf Grund des starr ausgeformten Stützrades 17 erfolgt ein relativ steiler Anstieg bis zum maximalen Moment T2, wie es durch den Abschnitt 42 dargestellt ist.

Wird zusätzlich eine Torsion mittels des Torsionsabschnittes 34 ermöglicht, so dass sich die Gesamtverschiebung γ aus einer elastischen Verformung des Zahns 35 und einer Torsion des Verbindungsabschnittes 20 zusammensetzt, dann ergibt sich ein Verlauf, der sich durch den Abschnitt 41 und den Abschnitt 43 ergibt, der durch eine unterbrochene Linie dargestellt ist. Bis zum Erreichen des Moments T1 erfolgt die Bedämpfung des Momentes im Wesentlichen durch eine elastische Verformung der Zähne 35 des ersten Rades 16. Nach Erreichen des Moments T1 und der Gesamtverdrehung γ1 erfolgt weiterhin eine Bedämpfung des Moments durch eine Torsion des Torsionsabschnittes 34 bis das maximale Moment T2 bei einer Gesamtverdrehung γ2 erreicht wird. Das maximale Moment T2 wird beispielsweise beim Anfahren an einen Anschlag erreicht. Durch die elastische Verformung des Torsionsabschnittes 34 wird eine maximale Gesamtverdrehung γ2 ermöglicht. Im Abschnitt 43 ist der Momentenverlauf zwar steiler als im Abschnitt 41, durch die Torsion wird der Momentenanstieg bis zum Block aber besser bedämpft als bei einer Ausgestaltung, wie sie durch den Abschnitt 42 dargestellt ist, so dass die Getriebe-Antriebseinheit 1 noch besser gegen Beschädigungen geschützt ist.

Es ist anzumerken, dass alternativ zu dem in den Fig. 1 und 2 dargestellten ersten Ausführungsbeispielen auch eine Ausgestaltung möglich ist, bei der die Abtriebseinheit 15 nicht als Vorbaugruppe ausgeführt ist und die Lagerung nicht durch ein zwischen den Räder 16, 17 angeordnetes Lager 23, sondern außerhalb in dem Gehäuseteil 2 und/oder dem Deckel 5 erfolgt, wobei der symmetrische Aufbau erhalten bleibt. Die Lagerstellen des Schneckenradzusammenbaus, der das Schneckenrad 9, das Ritzel 11 und die als Lagerzapfen oder Lagerbolzen ausgestaltete Welle 12 umfasst, sowie der Abtriebseinheit 15, die das Trägerrad 16, 20 und das Stützrad 17 umfasst, können ohne Unterbrechung, das heißt kreisrund, ausgeführt sein. In diesem Fall erfolgt die Befüllung des Getriebes nicht von oben, sondern wahlweise von einer Seite, so dass beispielsweise zunächst das Trägerrad 16, 20 in das Gehäuse 2, 3, 5 eingelegt werden kann, dann der Zusammenbau des Schneckenrads erfolgt und anschließend das Trägerrad 16, 20 montiert wird und abschließend das zusammengesetzte Gehäuse 2, 3, 5 mit dem Deckel 5 verschlossen wird. Allerdings sind auch zahlreiche andere Montagemöglichkeiten denkbar.

Die Erfindung ist nicht auf die beschriebenen Ausführungsbeispiele beschränkt.

## Patentansprüche

1. Getriebe-Antriebseinheit (1), insbesondere zur Verstellung von Sitzelementen, mit einem elektrischen Antriebsteil (4), das zum zumindest mittelbaren Antreiben einer Zwischeneinheit (10) dient, und einer Abtriebseinheit (15), die über die Zwischeneinheit (10) antreibbar ist, wobei die Abtriebseinheit (15) ein erstes Rad (16) und zumindest ein zweites Rad (17) aufweist, wobei das zweite Rad (17) der Abtriebseinheit (15) in Bezug auf eine Drehachse (30) der Abtriebseinheit (15) zumindest im Wesentlichen symmetrisch zu dem ersten Rad (16) der Abtriebseinheit (15) angeordnet ist, wobei die Zwischeneinheit (10) einerseits mit dem ersten Rad (16) der Abtriebseinheit (15) und andererseits mit dem zweiten Rad (17) der Abtriebseinheit (15) in Wirkverbindung steht und eine zumindest im Wesentlichen symmetrische Krafteinleitung von der Zwischeneinheit (10) auf das erste Rad (16) der Abtriebseinheit (15) und von der Zwischeneinheit (10) auf das zweite Rad (17) der Abtriebseinheit (15) ermöglicht ist, **dadurch gekennzeichnet, dass** die Zwischeneinheit (10) ein Schneckenrad (9) aufweist, das mit einer von dem Antriebsteil (4) antreibbaren Schnecke (8) im Eingriff steht, und dass die Zwischeneinheit (10) über zumindest ein Ritzel (11) mit dem ersten Rad (16) der Abtriebseinheit (15) an einem ersten Ritzelabschnitt (25) und dem zweiten Rad (17) der Abtriebseinheit (15) an einem zweiten Ritzelabschnitt (26) im Eingriff steht, wobei das Schneckenrad (9) zwischen dem ersten Ritzelabschnitt (25) und dem zweiten Ritzelabschnitt (26) angeordnet ist.

2. Getriebe-Antriebseinheit nach Anspruch 1,
**dadurch gekennzeichnet,**
**dass** zumindest ein Lagerelement (23) vorgesehen ist, dass die Abtriebseinheit (15) zumindest einen Lagerabschnitt (24) aufweist, der zwischen dem ersten Rad (16) und dem zweiten Rad (17) vorgesehen ist, und dass die Abtriebseinheit (15) an dem Lagerabschnitt (24) in dem Lagerelement (23) drehbar gelagert ist.

3. Getriebe-Antriebseinheit nach einem der Ansprüche 1 bis 2,
**dadurch gekennzeichnet,**
**dass** das erste Rad (16) als Zahnrad ausgebildet ist, dass das zweite Rad (17) als Zahnrad ausgebildet ist, dass das erste Rad (16) zumindest im Bereich der Zähne elastischer ausgestaltet ist als das zweite Rad (17), um bei einer symmetrischen Krafteinleitung auf das erste Rad (16) und auf das zweite Rad (17) eine Verschiebung einer Zahnflanke (37) eines belasteten Zahns (35) des ersten Rades (16) relativ zu einer Zahnflanke (38) eines belasteten Zahns (36) des zweiten Rades (17) zu ermöglichen, wobei die Zahnflanke (37) des Zahns (35) des ersten Rades (16) der Zahnflanke (38) des Zahnes (36) des zweiten Rades (17) bei geringer Belastung vorausläuft.

4. Getriebe-Antriebseinheit nach Anspruch 3,
**dadurch gekennzeichnet,**
**dass** eine Zahndicke (d1) des Zahnes (35) des ersten Rades (16) größer ist als eine Zahndicke (d2) des Zahnes (36) des zweiten Rades (17).

5. Getriebe-Antriebseinheit nach einem der Ansprüche 1 bis 4,
**dadurch gekennzeichnet,**
**dass** die Abtriebseinheit (15) einen Torsionsabschnitt (34) aufweist, dass das erste Rad (16) über den Torsionsabschnitt (34) mit dem zweiten Rad (17) verbunden ist und dass der Torsionsabschnitt (34) eine Verdrehung des ersten Rades (16) der Abtriebseinheit (15) relativ zu dem zweiten Rad (17) der Abtriebseinheit (15) ermöglicht.

6. Getriebe-Antriebseinheit nach Anspruch 5,
**dadurch gekennzeichnet,**
**dass** die Abtriebseinheit (15) eine Abtriebsschnittstelle (18) aufweist, die zum Aufnehmen eines Anschlusselementes dient, dass die Abtriebsschnittstelle (18) so ausgestaltet ist, dass ein Formschluss zwischen dem Anschlusselement und der Abtriebsschnittstelle (18) im Bereich des Torsionsabschnittes (34) höchstens über einen Teilabschnitt des Torsionsabschnittes (34) ermöglicht ist.

7. Getriebe-Antriebseinheit nach Anspruch 5 oder 6,
**dadurch gekennzeichnet,**
**dass** die Abtriebsschnittstelle (18) so ausgestaltet ist, dass ein Formschluss mit dem Anschlusselement im Bereich des ersten Rades (16) ermöglicht ist, während ein Formschluss mit dem Anschlusselement im Bereich des zweiten Rades (17) verhindert ist.

8. Getriebe-Antriebseinheit nach einem der Ansprüche 1 bis 7,
**dadurch gekennzeichnet,**
**dass** das erste Rad (16) als Teil eines Trägerrades (16, 20) ausgestaltet ist und dass das zweite Rad (17) als Stützrad ausgestaltet ist, wobei das Stützrad mit einem Verbindungsabschnitt (20) des Trägerrades (16, 20) verbunden ist, der zwischen dem ersten Rad (16) und dem zweiten Rad (17) vorgesehen ist.

9. Getriebe-Antriebseinheit nach Anspruch 8,
**dadurch gekennzeichnet,**
**dass** das Trägerrad (16, 20) zumindest teilweise aus einem elastisch verformbaren Material ausgebildet ist und dass das Stützrad (17) aus einem Material ausgebildet ist, das relativ zu dem elastisch verformbaren Material des Trägerrades (16, 20) steif ist.

10. Getriebe-Antriebseinheit nach einem der Ansprüche 1 bis 9,
**dadurch gekennzeichnet,**
**dass** die Abtriebseinheit (15) sowohl in einer ersten Lage als auch in einer zweiten Lage mit einer umgekehrten Drehrichtung einbaubar ist, um eine Montage der Getriebe-Antriebseinheit (1) in Links- oder Rechtsausführung zu ermöglichen.

## Claims

1. Gearing-drive unit (1), in particular for adjusting seat elements, having an electric drive input part (4) which serves for at least indirectly driving an intermediate unit (10), and having a drive output unit (15) which can be driven via the intermediate unit (10), with the drive output unit (15) having a first wheel (16) and at least one second wheel (17), with the second wheel (17) of the drive output unit (15) being arranged at least substantially symmetrically with respect to the first wheel (16) of the drive output unit (15) in relation to an axis of rotation (30) of the drive output unit (15), with the intermediate unit (10) being operatively connected at one side to the first wheel (16) of the drive output unit (15) and at the other side to the second wheel (17) of the drive output unit (15), and with an at least substantially symmetrical introduction of force from the intermediate unit (10) into the first wheel (16) of the drive output unit (15) and from the intermediate unit (10) into the second wheel (17) of the drive output unit (15) being made possible, **characterized in that** the intermediate unit (10) has a worm wheel (9) which is in engagement with a worm (8) which can be driven by the drive input part (4), and **in that** the intermediate unit (10) is in engagement, via at least one pinion (11), with the first wheel (16) of the drive output unit (15) at a first pinion section (25) and with the second wheel (17) of the drive output unit (15) at a second pinion section (26), with the worm wheel (9) being arranged between the first pinion section (25) and the second pinion section (26).

2. Gearing-drive unit according to Claim 1,
**characterized**
**in that** at least one bearing element (23) is provided, in that the drive output unit (15) has at least one bearing section (24) which is provided between the first wheel (16) and the second wheel (17), and in that the drive output unit (15) is rotatably mounted on the bearing section (24) in the bearing element (23).

3. Gearing-drive unit according to one of Claims 1 and 2,
**characterized**
**in that** the first wheel (16) is designed as a toothed wheel, in that the second wheel (17) is designed as a toothed wheel, in that the first wheel (16) is designed, at least in the region of the teeth, so as to be more elastic than the second wheel (17) in order, in the event of a symmetrical introduction of force into the first wheel (16) and into the second wheel (17), to permit a displacement of a tooth flank (37) of a loaded tooth (35) of the first wheel (16) relative to a tooth flank (38) of a loaded tooth (36) of the second wheel (17), with the tooth flank (37) of the tooth (35) of the first wheel (16) leading the tooth flank (38) of the tooth (36) of the second wheel (17) under low loading.

4. Gearing-drive unit according to Claim 3,
**characterized**
**in that** a tooth thickness (d1) of the tooth (35) of the first wheel (16) is greater than a tooth thickness (d2) of the tooth (36) of the second wheel (17).

5. Gearing-drive unit according to one of Claims 1 to 4,
**characterized**
**in that** the drive output unit (15) has a torsion section (34), in that the first wheel (16) is connected to the second wheel (17) via the torsion section (34), and in that the torsion section (34) allows the first wheel (16) of the drive output unit (15) to twist relative to the second wheel (17) of the drive output unit (15).

6. Gearing-drive unit according to Claim 5,
**characterized**
**in that** the drive output unit (15) has a drive output interface (18) which serves to hold an attachment element, and in that the drive output interface (18) is designed so as to permit positive locking between the attachment element and the drive output interface (18) in the region of the torsion section (34) at most over a partial section of the torsion section (34).

7. Gearing-drive unit according to Claim 5 or 6,
**characterized**
**in that** the drive output interface (18) is designed so as to permit positive locking with the attachment element in the region of the first wheel (16), while positive locking with the attachment element in the region of the second wheel (17) is prevented.

8. Gearing-drive unit according to one of Claims 1 to 7,
**characterized**
**in that** the first wheel (16) is designed as part of a carrier wheel (16, 20), and in that the second wheel (17) is designed as a support wheel, with the support wheel being connected to a connecting section (20) of the carrier wheel (16, 20), said connecting section (20) being provided between the first wheel (16) and the second wheel (17).

9. Gearing-drive unit according to Claim 8,
**characterized**
**in that** the carrier wheel (16, 20) is formed at least partially from an elastically deformable material, and in that the support wheel (17) is formed from a material which is rigid in relation to the elastically deformable material of the carrier wheel (16, 20).

10. Gearing-drive unit according to one of Claims 1 to 9,
**characterized**
**in that** the drive output unit (15) can be installed both in a first position and also in a second position with a reversed rotational direction, in order to allow the gearing-drive unit (1) to be mounted in a left-hand or right-hand configuration.

## Revendications

1. Unité d'entraînement par engrenages (1), en particulier pour le réglage d'éléments de siège, comprenant une partie d'entraînement électrique (4) qui sert à l'entraînement au moins indirect d'une unité intermédiaire (10), et une unité de prise de force (15), qui peut être entraînée par le biais de l'unité intermédiaire (10), l'unité de prise de force (15) présentant une première roue (16) et au moins une deuxième roue (17), la deuxième roue (17) de l'unité de prise de force (15) étant disposée par rapport à un axe de rotation (30) de l'unité de prise de force (15) au moins de manière essentiellement symétrique par rapport à la première roue (16) de l'unité de prise de force (15), l'unité intermédiaire (10) étant en liaison fonctionnelle d'une part avec la première roue (16) de l'unité de prise de force (15) et d'autre part avec la deuxième roue (17) de l'unité de prise de force (15), et une introduction de force au moins essentiellement symétrique de l'unité intermédiaire (10) sur la première roue (16) de l'unité de prise de force (15) et de l'unité intermédiaire (10) sur la deuxième roue (17) de l'unité de prise de force (15) étant possible, **caractérisée en ce que** l'unité intermédiaire (10) présente une roue à denture hélicoïdale (9) qui est en prise avec une vis sans fin (8) pouvant être entraînée par la partie d'entraînement (4), et **en ce que** l'unité intermédiaire (10) est en prise par le biais d'au moins un pignon (11) avec la première roue (16) de l'unité de prise de force (15) au niveau d'une première portion de pignon (25) et avec la deuxième roue (17) de l'unité de prise de force (15) au niveau d'une deuxième portion de pignon (26), la roue à denture hélicoïdale (9) étant disposée entre la première portion de pignon (25) et la deuxième portion de pignon (26).

2. Unité d'entraînement par engrenages selon la revendication 1,
**caractérisée en ce qu'**au moins un élément de palier (23) est prévu, **en ce que** l'unité de prise de force (15) présente au moins une portion de palier (24) qui est prévue entre la première roue (16) et la deuxième roue (17), et **en ce que** l'unité de prise de force (15) est montée à rotation sur la portion de palier (24) dans l'élément de palier (23).

3. Unité d'entraînement par engrenages selon l'une quelconque des revendications 1 à 2,
**caractérisée en ce que**
la première roue (16) est réalisée sous forme de roue dentée, **en ce que** la deuxième roue (17) est réalisée sous forme de roue dentée, **en ce que** la première roue (16), au moins dans la région des dents, est configurée de manière plus élastique que la deuxième roue (17), afin de permettre, dans le cas d'une introduction de force symétrique sur la première roue (16) et sur la deuxième roue (17), un déplacement d'un flanc de dent (37) d'une dent sollicitée (35) de la première roue (16) par rapport à un flanc de dent (38) d'une dent sollicitée (36) de la deuxième roue (17), le flanc de dent (37) de la dent (35) de la première roue (16) passant devant le flanc de dent (38) de la dent (36) de la deuxième roue (17) dans le cas d'une faible contrainte.

4. Unité d'entraînement par engrenages selon la revendication 3,
**caractérisée en ce**
**qu'**une épaisseur de dent (d1) de la dent (35) de la première roue (16) est supérieure à une épaisseur de dent (d2) de la dent (36) de la deuxième roue (17).

5. Unité d'entraînement par engrenages selon l'une quelconque des revendications 1 à 4,
**caractérisée en ce que**
l'unité de prise de force (15) présente une portion de torsion (34), **en ce que** la première roue (16) est connectée par le biais de la portion de torsion (34) à la deuxième roue (17), et **en ce que** la portion de torsion (34) permet une rotation de la première roue (16) de l'unité de prise de force (15) par rapport à la deuxième roue (17) de l'unité de prise de force (15).

6. Unité d'entraînement par engrenages selon la revendication 5,
**caractérisée en ce que**
l'unité de prise de force (15) présente une interface de prise de force (18) qui sert à recevoir un élément de raccordement, **en ce que** l'interface de prise de force (18) est configurée de telle sorte qu'un engagement par coopération de forme entre l'élément de raccordement et l'interface de prise de force (18) soit possible dans la région de la portion de torsion (34) tout au plus par le biais d'une portion partielle de la portion de torsion (34).

7. Unité d'entraînement par engrenages selon la revendication 5 ou 6,
**caractérisée en ce que**
l'interface de prise de force (18) est configurée de telle sorte qu'un engagement par coopération de forme avec l'élément de raccordement soit possible dans la région de la première roue (16), tandis qu'un engagement par coopération de forme avec l'élément de raccordement dans la région de la deuxième roue (17) est impossible.

8. Unité d'entraînement par engrenages selon l'une quelconque des revendications 1 à 7,
**caractérisée en ce que**
la première roue (16) est configurée sous forme d'une partie d'une roue porteuse (16, 20), et **en ce que** la deuxième roue (17) est configurée sous forme de roue de support, la roue de support étant connectée à une portion de connexion (20) de la roue porteuse (16, 20), qui est prévue entre la première roue (16) et la deuxième roue (17).

9. Unité d'entraînement par engrenages selon la revendication 8,
**caractérisée en ce que**
la roue porteuse (16, 20) est réalisée au moins en partie en un matériau déformable élastiquement et **en ce que** la roue de support (17) est réalisée en un matériau qui est rigide par rapport au matériau déformable élastiquement de la roue porteuse (16, 20).

10. Unité d'entraînement par engrenages selon l'une quelconque des revendications 1 à 9,
**caractérisée en ce que**
l'unité de prise de force (15) peut être montée à la fois dans une première position et dans une deuxième position avec un sens de rotation inversé, afin de permettre un montage de l'unité d'entraînement par engrenages (1) dans une réalisation gauche ou droite.
